# EUROPEAN PATENT APPLICATION

(11) **EP 2 778 715 A1**
(43) Date of publication of application: **17.09.2014**
(21) Application number: 13159187.7
(22) Date of filing: 14.03.2013
(51) Int. Cl.: G01T 1/24, H01L 27/146

(54) **A pixel unit for a radiographic image detecting apparatus**

(71) Applicant: Agfa Healthcare, 2640 Mortsel (BE)
(72) Inventor: Sevenhans, Joannes, 2640 Mortsel (BE)
(74) Representative: Verbrugghe, Anne Marie L.

(57) **Abstract**

The pixel unit 1 for a radiographic image detecting apparatus according to the invention comprises a current multiplier 100 arranged between the radiation detector 1 and the switch 30. This allows for a reduction of the impact of kTC noise on the readout signal 52 in the readout line 50.

## Description

### Field of the Invention

The present invention generally relates to a pixel unit for a radiographic image detecting apparatus, preferably a direct digital radiographic image detecting apparatus.

### Background of the Invention

The invention concerns a radiographic image detecting apparatus used for medical diagnosis, such as for example by detecting and providing an X-ray image of a patient. Currently flat panel X-ray detectors are available that make use of digital radiography. This means that the X-ray image can be generated without requiring the use of a photographic film. In a direct digital radiographic image detecting apparatus, the flat panel detector is able to send the X-ray image directly to the image processing equipment for example by means of a wired or wireless communication interface. Such a radiographic image detecting apparatus makes use of a plurality of pixel units, each comprising a radiation detector that generates an electric charge upon reception of radiation emitted by a radiographic image radiation source.

Such a system is for example known from US2011/0278465A1. This system improves the quality of the signal from the radiation detecting pixels by reducing the effect of kTC noise (k: Boltzmann's constant; T temperature; C: capacitance of the readout bus) by means of correlated double sampling. However this technique requires an additional signal processing circuit, additional control lines and thus complicates design and increases the required processing power.

In such flat panel X-ray detectors attempts were made to anneal the amorphous Thin Film Transistors (TFT's) using Low Temperature Polycrystalline Silicon (LTPS) LASER techniques to increase the mobility of the amorphous silicon and achieve an increased transconductance in the TFT's. The microcrystalline TFT channel controlled by the gate was leaky as the gate oxide suffered from the cracks at the borders of the resulting grains of recrystallization. Additionally voltage gain in such voltage mode active pixels is limited because of the low mobility, and thus low gain, that is associated with the amorphous silicon TFT's and the cracks in the gate oxide of the LTPS TFT's cause to much leakage, and thus dark current, in the pixel.

Another such system is known from US2012/0132820A1. This system has no means to improve signal quality. It comprises a current detector to detect the current flowing in a bias line. This bias line is arranged between a plurality of radiation detecting pixels and the power supply applying the bias voltage. The current detector includes a current mirror circuit in order to minimize the drop in bias voltage caused by the current detector so that effect on the sensitivity of the radiation detecting pixels would be minimized.

It is a goal of the current invention to provide an alternative and improved pixel unit for a radiographic image detecting apparatus that is able to reduce the effect of kTC noise which overcomes the above mentioned drawbacks, with a simple design and without the need for an increase in processing power.

### Summary of the Invention

According to a first aspect of the invention, there is provided a pixel unit for a radiographic image detecting apparatus comprising:
- a radiation detector configured to generate electric charge upon reception of radiation emitted by a radiographic image radiation source;
- a bias line configured to provide a bias voltage, the bias line being connected to the radiation detector; and
- a switch connected to the radiation detector, a driving line and a readout line, the switch being configured to be operated in function of a driving signal received from the driving line such that the switch:
- during an integration time period (Ti), disconnects the radiation detector (10) from the readout line (50), such that the electric charges (3) generated by the radiation detector (10) are accumulated;
- during a readout time period, connects the radiation detector to the readout line such that the accumulated electric charges generated by the radiation detector produce a readout signal,
   CHARACTERIZED IN THAT
   the pixel unit further comprises a current multiplier connecting the radiation detector and the switch,
   - the current multiplier configured to provide at an output side an output current equal to a current received at an input side multiplied with a predetermined factor,
   - the input side of the current multiplier being connected to the radiation detector, and
   - the output side of the current multiplier being connected to the switch.

The impact of kTC noise on the readout signal in the readout line will be reduced with at least the predetermined factor relative to a prior art pixel unit lacking a current multiplier. As now, instead of the current resulting directly from the radiation detector flowing through the readout line, there will flow a multiplied by at least the predetermined factor through the readout line during the readout Time period. Thus the relative impact on the readout signal of the kTC noise injected in the readout line 50, that is determined mainly by the capacitance of the readout line, will thus be reduced with at least this predetermined factor.

According to an embodiment the radiation detector comprises a photo-electric detector.

Such a detector is suitable to convert radiation from the radiographic image source to electric charges.

According to a further embodiment the photo-electric detector comprises a PIN photodiode configured to detect X ray photons.

Such a PIN photodiode is particularly suitable for conversion of X ray radiation to electric charges and can be manufactured as a microelectronic component.

According to a further preferred embodiment the PIN photodiode, the switch and the current multiplier are arranged on a substrate as microelectronic components; and in that the cathode of the PIN diode faces away from the substrate.

This allows for an arrangement which simplifies manufacturing and allows the radiation to reach the PIN photodiode with minimal degradation, thus reducing image lag.

According to a further preferred embodiment the PIN photo diode is connected with its cathode to the bias line and with its anode to the input side of the current multiplier, and in that the bias voltage is a predetermined positive voltage.

This further simplifies the design and connection of the microelectronic components forming the pixel unit and arrangement of a plurality of these pixel units in the radiographic image detecting apparatus.

According to a further embodiment the current multiplier comprises a single output current multiplier comprising an input Thin Film Transistor and an output Thin Film Transistor comprising a width to length ratio equal to the width to length ratio of the input Thin Film Transistor multiplied by the predetermined factor,
- the input Thin Film Transistor being connected with:
   - its drain to the input side of the current multiplier;
   - its gate to its drain;
   - its gate to the gate of the output Thin Film Transistor; and
   - its source to the source of the first output Thin Film Transistor,
- the output Thin Film Transistor being connected with:
   - its drain to the bias line;
   - its gate to the gate of the input Thin Film Transistor;
   - its source to the output side of the current multiplier.

This embodiment allows for an implementation of the pixel unit with a microelectronic circuit that allow for efficient manufacturing of the current multiplier.

According to a further embodiment the current multiplier comprises a dual stage single output current multiplier comprising an main stage connected to the output side of the current multiplier and a buffer stage connected to the input side of the current multiplier,
- the main stage comprising a main input Thin Film Transistor and a main output Thin Film Transistor, the main output Thin Film Transistor comprising a width to length ratio equal to the width to length ratio of the main input Thin Film Transistor multiplied by the predetermined factor,
- the buffer stage comprising a buffer input Thin Film Transistor and a buffer output Thin Film Transistor, the buffer output Thin Film Transistor comprising a width to length ratio equal to the width to length ratio of the buffer input Thin Film Transistor multiplied by the predetermined factor,
- the buffer input Thin Film Transistor being connected with:
   - its drain to the input side of the current multiplier;
   - its gate to its drain;
   - its gate to the gate of the buffer output Thin Film Transistor;
   - its source to the drain of the main output Thin Film Transistor,
- the buffer output Thin Film Transistor being connected with:
   - its drain to the bias line;
   - its gate to the gate of the buffer input Thin Film Transistor;
   - its source to the drain of the main output Thin Film Transistor,
- the main input Thin Film Transistor being connected with:
   - its drain to the source of the buffer input Thin Film transistor;
   - its gate to the gate of the main output Thin Film Transistor; and
   - its source to the source of the main output Thin Film Transistor,
- the main output Thin Film Transistor being connected with:
   - its drain to the source of the buffer output Thin Film transistor;
   - its gate to its drain;
   - its source to the output side of the current multiplier.

Such a dual stage current multiplier allows to reduce distortion of the signal generated by the current multiplier with respect to the signal generated by the radiation detector as the drain to source voltage of the Thin Film Transistor pair of the main stage are equalised by means of the buffer stage.

According to a further embodiment the current multiplier comprises a dual output current multiplier comprising an input Thin Film Transistor and an output Thin Film Transistor comprising a width to length ratio equal to the width to length ratio of the input Thin Film Transistor multiplied by the predetermined factor,
- the input Thin Film Transistor being connected with:
   - its drain to the input side of the current multiplier;
   - its gate to the gate of the output Thin Film Transistor; and
   - its source to a first output at the output side of the current multiplier,
- the output Thin Film Transistor being connected with:
   - its drain to the bias line;
   - its gate to its drain;
   - its source to a second output at the output side of the current multiplier,
- the switch being further configured to:
   - during the readout time period, connect the first output and the second output; and
   - during the integration time period, disconnect the first output and the second output.

This dual output current multiplier allows to reduce the leakage current from the radiation detector during the integration time period.

According to a further embodiment the current multiplier comprises a dual stage dual output current multiplier comprising an main stage connected to the output side of the current multiplier and a buffer stage connected to the input side of the current multiplier,
- the main stage comprising a main input Thin Film Transistor and a main output Thin Film Transistor, the main output Thin Film Transistor comprising a width to length ratio equal to the width to length ratio of the main input Thin Film Transistor multiplied by the predetermined factor,
- the buffer stage comprising a buffer input Thin Film Transistor and a buffer output Thin Film Transistor, the buffer output Thin Film Transistor comprising a width to length ratio equal to the width to length ratio of the buffer input Thin Film Transistor multiplied by the predetermined factor,
- the buffer input Thin Film Transistor being connected with:
   - its drain to the input side of the current multiplier;
   - its gate to its drain;
   - its gate to the gate of the buffer output Thin Film Transistor;
   - its source to the drain of the main output Thin Film Transistor,
- the buffer output Thin Film Transistor being connected with:
   - its drain to the bias line;
   - its gate to the gate of the buffer input Thin Film Transistor;
   - its source to the drain of the main output Thin Film Transistor,
- the main input Thin Film Transistor being connected with:
   - its drain to the source of the buffer input Thin Film transistor;
   - its gate to the gate of the main output Thin Film Transistor; and
   - its source to a first output at the output side of the current multiplier;
- the main output Thin Film Transistor being connected with:
   - its drain to the source of the buffer output Thin Film transistor;
   - its gate to its drain;
   - its source to a second output the output side of the current multiplier,
- the switch being further configured to:
   - during the readout time period, connect the first output and the second output; and
   - during the integration time period, disconnect the first output and the second output.

This dual stage, dual output current multiplier enables both to reduce leakage current during the integration time period, as well as a decrease in distortion by equalising the drain to source voltage of the Thin Film Transistor pair of the main stage.

According to a further embodiment said switch comprises at least one Thin Film Transistor.

According to a further embodiment the switch comprises at least one Thin Film Transistor that is connected with:
- its gate to the driving line;
- its source to the readout line;
- its drain to the output side of the current multiplier.

This allows the switch to be implemented by means of a simple circuit with the same microelectronic components as for the corresponding current multiplier.

According to a further embodiment, when the pixel unit comprises a dual output current multiplier, the switch comprises a first Thin Film Transistor and a second Thin Film Transistor,
- the drain of the first Thin Film Transistor being connected with the first output of the output side of the current multiplier,
- the drain of the second Thin Film Transistor being connected with the second output of the output side of the current multiplier.

Such a switch, when combined with a dual output current multiplier reduces current leakage from the radiation detector during the integration time period by breaking the current multiplier circuit.

According to a second aspect of the invention, there is provided a radiographic image detecting apparatus comprising a plurality of pixel units according to the first aspect of the invention.

This radiographic image detecting apparatus will be able to provide images with a higher quality as the impact of kTC noise in the readout lines on the readout signal will be reduced and thus the sensitivity and precision of the current pixel unit can be increased.

Preferably the plurality of pixel units are arranged in a plurality of rows and columns.

According to a further preferred embodiment, the image detecting apparatus comprises a plurality of the driving lines and a plurality of the readout lines, the driving lines each being connected to a plurality of pixel units of a single row and each of the readout lines each being connected to a plurality of pixel units of a single column.

### Brief Description of the Drawings

Figure 1 schematically illustrates the use of a radiographic image detection apparatus according to the invention;

Figure 2 schematically illustrates the main components of the radiographic image detection apparatus comprising a plurality of pixel units;

Figure 3 schematically illustrates a pixel unit according to the invention;

Figures 4 to 8 illustrate a plurality of specific embodiments of the pixel unit according to Figure 3; and

Figure 9 schematically illustrates the micro-electronic layers used for producing the pixel unit according to Figure 3.

### Detailed Description of Embodiment(s)

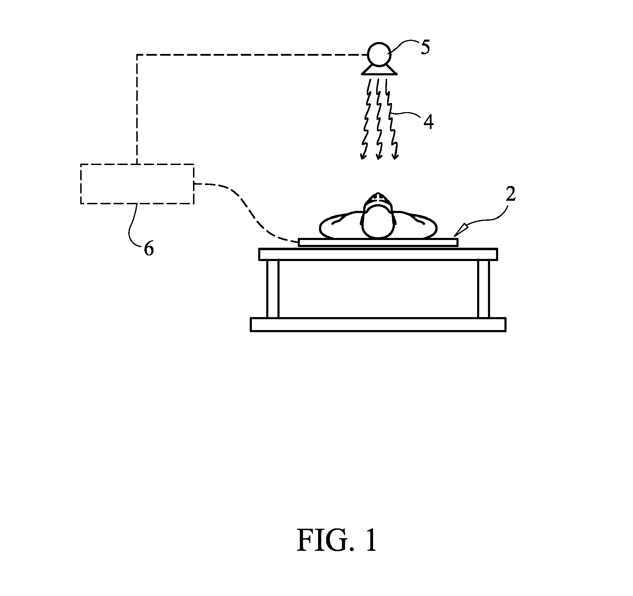

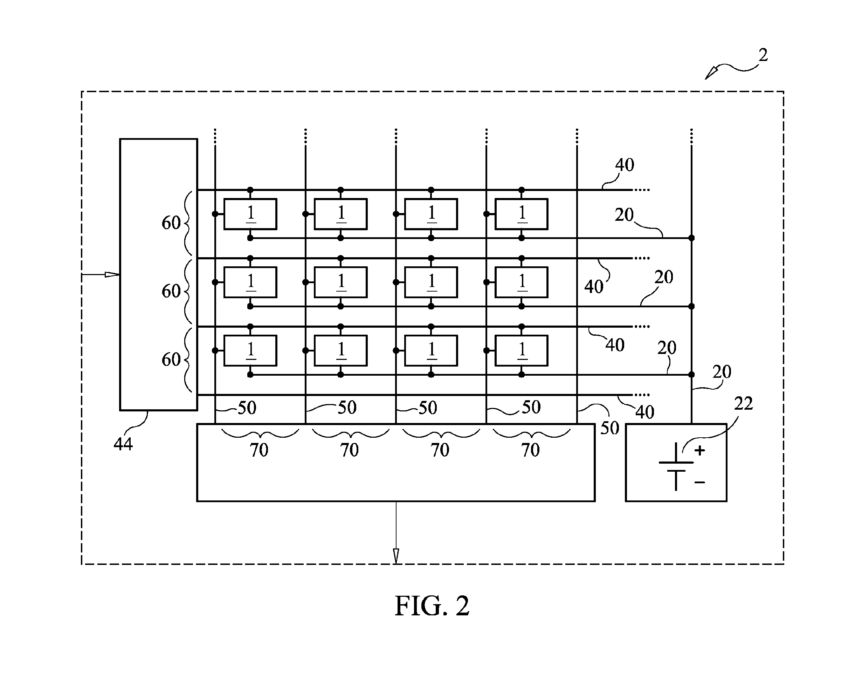

As shown in Figure 1, the radiographic image detection apparatus 2 is placed below a patient which is for example lying on a suitable bed or table. The radiographic image detection apparatus during image capture receives radiation 4 from a radiation source 5 as instructed by the controller of a radiographic image system 6. According to this embodiment of the invention the radiation source 5 emits X-rays 4, however it is clear that alternative radiation sources 5 emitting alternative radiation such as for example alpha rays, beta rays, gamma rays, electron beams, ... could be used when combined with a suitable radiographic image detection apparatus 2. The intensity of the X-rays 4 are detected by a plurality of pixel units 1, as shown in more detail in Figure 2, each comprising a radiation detector 10 configured to generate electric charge 3 upon reception of the radiation 4 emitted by the radiation source 5. The electric charges 3 of these pixels 1 are subsequently collected and processed by the circuitry of the radiographic image detection apparatus 2 in order to generate a, preferably digital, representation of the generated radiographic image, that is suitable to be processed by further medical image processing modules for storage, further processing or displaying of the medical image by the radiographic image system 6 and/or a hospital information system.

As shown in Figure 2, the radiographic image detecting apparatus 2 comprises a plurality of pixel units 1 arranged in a plurality of rows 60 and columns 70. The pixel units 1 that are arranged in a same row 60 are connected to a driving line 40 for receiving a driving signal 42 from a drive signal controller 44. It is clear that a plurality of the driving lines 40 and a plurality of the readout lines 50, the driving lines 40 each being connected to a plurality of pixel units 1 of a single row 60 and the readout lines 50 each being connected to a plurality of pixel units 1 of a single column 70. These readout lines 50 feed a readout signal 52 produced by the electric charges 3 generated by a radiation detector 10 to a readout signal controller 54. The readout signal 52 is by the readout signal controller 54 to a form suitable for further digital communication or processing techniques allowing the radiographic image to be efficiently transferred to the radiographic image system 6, for example by means of a suitable wired or wireless transceiver. The radiographic image system 6 could then further comprise an image processor, input devices such as pointers or a keyboard for receiving input operations from an operator and a display for displaying the radiographic image.

It is clear that according to particular embodiments a plurality of driving signal controllers 42 controlling a predetermined number of the driving lines 40 could be provided, and equally a plurality of readout signal controllers 54 each receiving a predetermined plurality of readout lines 50. The driving signal controller 44 or the readout signal controller 54 according to a specific embodiment may be implemented as an Application Specific Integrated Circuit (ASIC), however alternatively any other suitable controller technology could be used. In one particular example there is provided a radiographic image detection apparatus 2 is dimensioned about 43,18cm (17 inch) by 35.56cm (14 inch), comprising a matrix of pixel units 1 arranged in 3456 rows by 2880 columns. This particular embodiment comprises 15 driving signal controllers 44, each controlling 216 driving lines 40; and 16 readout signal controllers 54, each receiving 192 readout lines 50. As further shown in Figure 2 each of the pixel units 1 is also connected to a bias line 20 that provides a bias voltage 22. This bias voltage 22 is provided by a suitable direct current voltage source connected to the bias lines 20.

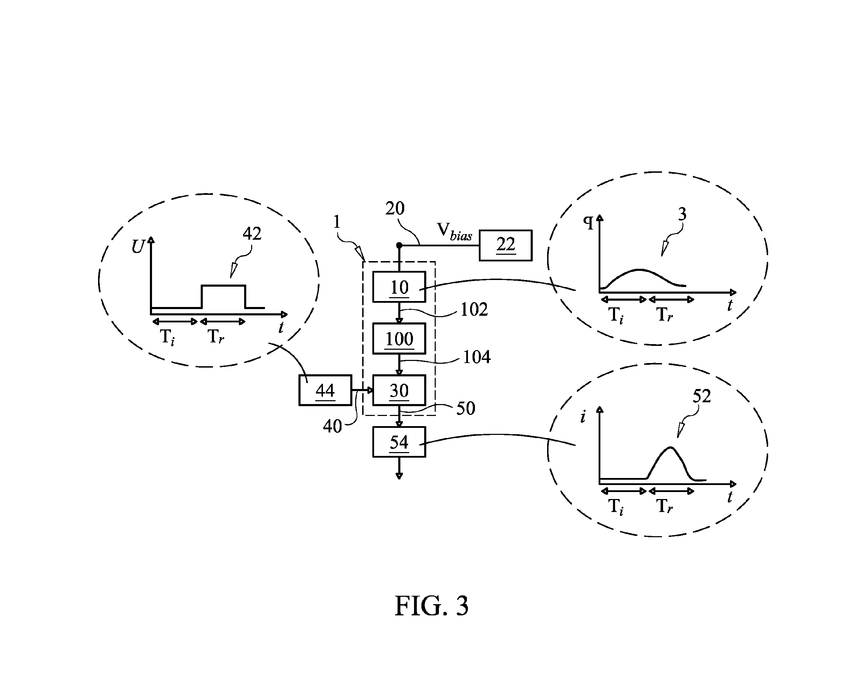

The pixel units 1 for the radiographic image detecting apparatus 2 of Figure 2 are schematically shown in more detail in Figure 3. The bias line 20 is connected to the radiation detector to provides Vbias, the bias voltage 22, to the radiation detector 10. The radiation detector 10 preferably comprises a photo-electric detector 10, however any other suitable radiation detector 10 configured to generate electric charge 3 upon reception of radiation 4 emitted by a radiographic image radiation source 5 could be used. In order to convert the radiation 4 to a wavelength more suitable for the photo-electric detector 10, the photo-electric detector 10 could optionally cooperate with a scintillator 44. Alternatively the photo-electric detector 10 could generate electric charges 3 directly from the received radiation 4.

The pixel unit 1 further comprises a current multiplier 100 that is connected at an input side 102 to the radiation detector 10. This current multiplier 100 provides at an output side 104 an output current equal to an input current received at the input side 102 multiplied with a predetermined factor. This predetermined factor could for example be any suitable real number in the range of 1,5 to 40, for example 2 to 20, preferably 5 or 10. The predetermined factor could be determined in function of parameters of the radiation detector 10 or the radiation source 5.

The pixel unit 1 further comprises a switch 30 that is connected to the output side 104 of the current multiplier 100. As shown, the switch 30 is being operated in function of the driving signal 42 received via the driving line 40 from the driving signal controller 44. Such a driving signal 42 is schematically shown in Figure 3 and this cyclic driving signal 42 comprises at least two distinct time periods, namely a readout time period Tr and an integration time period Ti. During the integration time period Ti, during which the pixel unit 1 is exposed to the emitted radiation 4, the driving signal 42 drives the switch 30 such that it disconnects the radiation detector 10 from the readout line 50. In this way during the integration time period the radiation detector will accumulate the electric charges 3 generated upon reception of radiation 4 from the radiographic radiation source 5. Subsequently during the readout time period Tr, during which the pixel unit 1 is no longer exposed to the emitted radiation 4, the driving signal 42 drives the switch 30 such that it connects the radiation detector 10 to the readout line 50 such that the electric charges 3 generated by the radiation detector 10 produce a readout signal 52 on the readout line 50. This readout signal 52 on the readout line 50 is then received by the readout signal controller 54 for further processing the information generated by the pixel unit 1 in order to generate the radiographic image. As schematically shown the readout signal controller 54 is connected to a common reference or ground plane so that the readout signal 52 can be detected as a current i flowing between the radiation detector 10 and this ground plane during the readout time period.

It is clear that according to the embodiment of Figures 1 to 3, where the pixel units 1 are arranged in rows 60 and columns 70, the pixel units 1 are controlled to produce a readout signal 52 sequentially, one row 60 at a time in order to produce the information for the complete radiographic image. This means that after the radiation source 5 emitted a predetermined amount of radiation, the driving signal controller 44 will provide a suitable driving signal 42 on the driving line 40 of a first row 60 of pixel units 1, so that the switches 30 of these pixel units 1 will be connected to their readout lines 50, one for each corresponding column 70, in order to provide a corresponding number of readout signals 52 to the readout signal controller 54. During the readout time period Tr of the driving signal 42 for this first row 60 of pixel units 1, all other rows 60 of pixel units 1 will remain in the integration period Ti of their corresponding driving signal 42 in which their switches 30 disconnect the pixel unit from the corresponding readout lines 50. In this way, during the readout time period Tr of this first row 60 of pixel units 1, the readout signals 52 received at the readout controller 54 will be able to provide information for a first line of the raster of image information for the radiographic image. After completion of the readout time period Tr of the first row 60 of pixel units 1 its driving signal 42 will cycle back to the integration time period during which the switches 30 will again disconnect the pixel units 1 from their readout lines 50. Subsequently the readout time period Tr for a second row 60 of pixel units 1 will be initiated by the driving signal controller 44 providing a suitable driving signal 42 on the driving line 40 of this second row 60 of pixel units 1. This will connect the switches 30 of these pixel units 1 to their readout lines 50, while all other rows 60 of pixel units 1 will remain in the integration period Ti of their corresponding driving signal 42 in which their switches 30 disconnect these pixel units 1 from the corresponding readout lines 50. In this way, during the readout time period Tr of this second row 60 of pixel units 1, the readout signals 52 received at the readout controller 54 will be able to provide information for a second line of the raster of image information for the radiographic image. This mode of operation will continue until one by one all rows 60 of pixel units 1 have been provided with a suitable driving signal 42 during their readout time period Tr, so that line by line the raster of image information for the radiographic image is completed.

The readout signal 52 generated by the pixel units 1 schematically illustrated in Figures 1 to 3 is subjected to thermal noise or kTC noise injected in the readout lines 52 between the pixel unit 1 and the readout controller 54. The level of this kTC noise is at the frequencies of interest largely determined by the Capacitance of the readout line 52 as the other parameters namely k: Boltzmann's constant and T: temperature are parameters that cannot be influenced by the systems design. The equivalent RC circuit for a particular embodiment of a readout line could for example comprise a resistor value R of about 2,5kOhm and a capacitor value of about 100pF. At a temperature T of 300K this would result in a RMS noise voltage of about 6,4µV, which corresponds to a charge variance of about 4000e⁻. It is clear that the degradation of the readout signal 52 by means of the kTC noise injected in the readout lines 50 is reduced by the current multiplier 100. The charges 3 generated by the radiation detector 10 during the integration period Ti will flow to the input side 102 of the current multiplier 100 during the readout time period Tr when the switch 30 connects the pixel unit 1 via the readout line 50 to the readout controller 54. The current these charges 3 generate at the input side 102 of the current multiplier 100 will be multiplied by a predetermined factor N at the output side 104 of the current multiplier 100. This multiplied current will, during the integration time period Ti, flow via the closed switch 30 to the readout line 50 where kTC noise is injected. It is clear that the impact of the kTC noise signal on the readout signal 52 will thus be reduced with this predetermined factor N, when compared with a prior art system comprising a pixel unit 1 without a current multiplier 100.

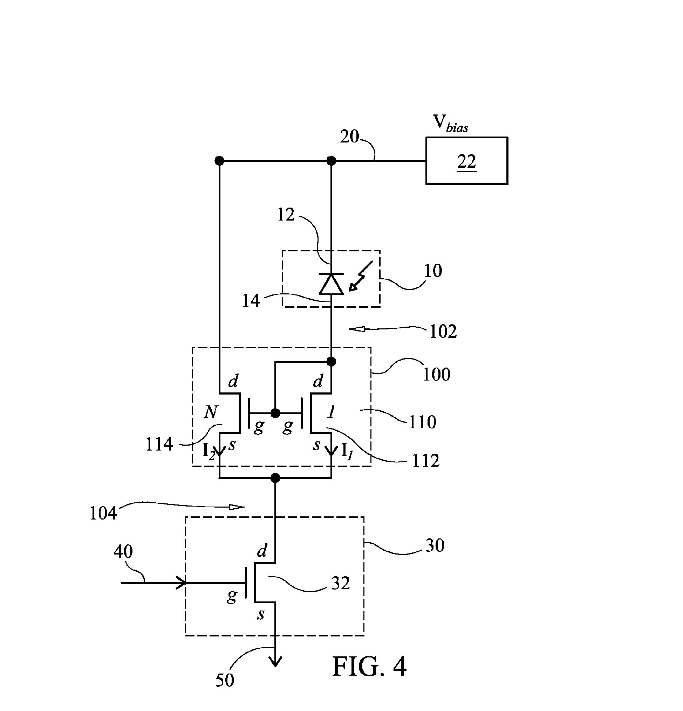

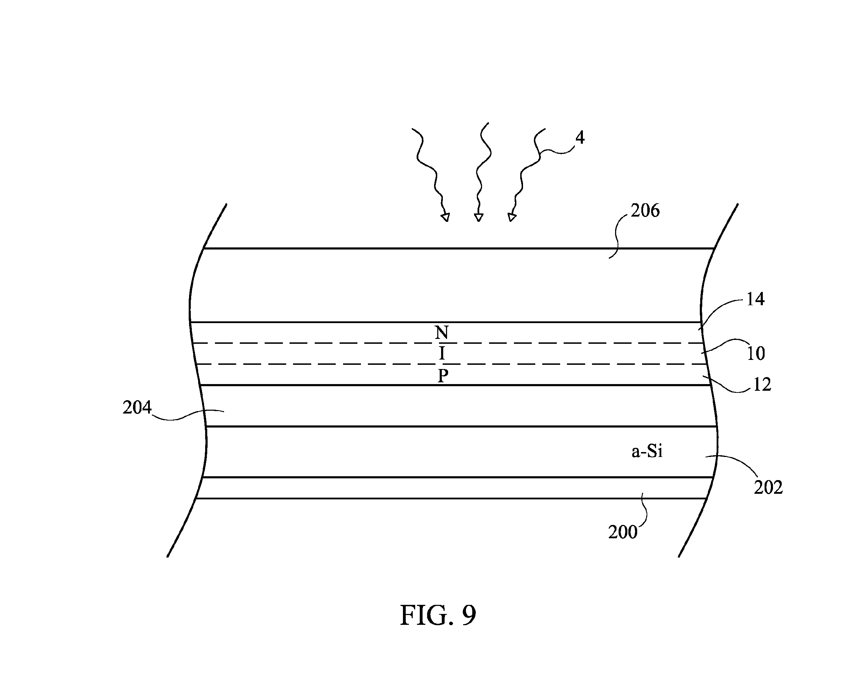

A particular embodiment of the pixel unit 1 of Figure 3 is shown in Figure 4. The radiation detector 10 is implemented as a PIN photo diode 10 that is connected with its cathode 12 to the bias line 20 and with its anode 14 to the input side 102 of the current multiplier 100. When this is combined with a bias voltage 22 that is a predetermined positive voltage Vbias with respect to the ground plane this allows the PIN diode to be implemented as a microelectronic component with the anode 14 facing away from the substrate 200. This is advantageous as will be described in further detail with reference to Figure 9. Such a PIN photodiode 10 is particularly suited to detect radiation 4 from X ray photons, however any other suitable photo-electric detector 10 could be provided as a possible alternative embodiment.

The current multiplier 100 of the embodiment of Figure 4 comprises a single output current multiplier 110. This single output current multiplier 110 is formed by means of two Thin Film Transistors 112, 114. These two Thin Film Transistors 112, 114 which will be referred to as an input Thin Film Transistor 112 and an output Thin Film Transistor 114 are connected to form the single output current multiplier 110. The input Thin Film Transistor 112 is connected with:
- its drain to the input side 102 of the current multiplier 100;
- its gate to its drain;
- its gate to the gate of the output Thin Film Transistor 114; and
- its source to the source of the first output Thin Film Transistor 114.
The output Thin Film Transistor 114 being connected with:
- its drain to the bias line 20;
- its gate to the gate of the input Thin Film Transistor 112;
- its source to the output side 104 of the current multiplier 100.
It is generally known that in such a circuit, because the gate to source voltage Vgs of both the input Thin Film Transistor 112 and the output Thin Film Transistor 114 are equal and when both these Thin Film Transistors 112, 114 are arranged, close to each other on the same substrate and are manufactured from the same semiconductor material then the ratio of the input current I1 flowing into the branch of the input Thin Film Transistor 112 and the mirror current I2 generated in the branch of the output Thin Film Transistor 114 will be a function of the ratio of the Width to Length ratio (W/L) of the channel of both these Thin Film Transistors 112, 114. This means that if the input Thin Film Transistor 112 comprises a channel with a width to length ratio W1/L1 and the output Thin Film Transistor 114 comprises a channel with a width to length ratio of W2/L2, the ratio I2/I1 will be largely determined as a function of (W2/L2) / (W1/L1). By designing the width to length ratio W2/L2 of the output Thin Film Transistor 114 to be equal to the width to length ratio W1/L1 of the input Thin Film Transistor 112 multiplied by the predetermined factor N, this thus means W2/L2 = N.(W1/L1), the ratio of the mirror current I2 and the input current I1 will be largely equal to this predetermined factor N, as (W2/L2) / (W1/L1) = (N.(W1/L1)) / (W1/L1) = N.

As further shown in Figure 4, the switch 30 comprises one Thin Film Transistor 32 that is connected with:
- its gate to the driving line 40;
- its source to the readout line 50;
- its drain to the output side 104 of the current multiplier 100.
During the integration time period Ti, the driving signal 42 on the driving line 40 provides a suitable voltage level to the gate of the Thin Film Transistor to switch it to an OFF state in which it disconnects the output side 104 of the current multiplier from the readout line 50 so that the charges 3 can accumulate in the PIN diode 10 in response to detection of radiation 4. During the readout time period Tr, when the driving signal 42 on the driving line 40 provides a suitable voltage level to the gate of the Thin Film Transistor to switch it to an ON state in which it connects the output side 104 of the current multiplier to the readout line 50 so that both currents I1, I2 can flow from the branches of the current multiplier 100 to the readout signal controller 54. It is clear that the impact of the kTC noise in the readout line 50 will be reduced with at least the predetermined factor N relative to a prior art pixel unit lacking a current multiplier. As now, instead of the current I1 resulting directly from the PIN diode 10 flowing through the readout line 50, there will flow a current I1 + I2 = I1 + N.I1 = (N+1).I1 through the readout line 50 during the readout Time period. As in both cases the level of the kTC noise remains the same, as is determined mainly by the capacitance of the readout line 50, the relative impact of this kTC noise injected in the readout line 50 on the readout signal 52 generated with a pixel unit 1 comprising a current multiplier 100 will thus be reduced with at least the predetermined factor N.

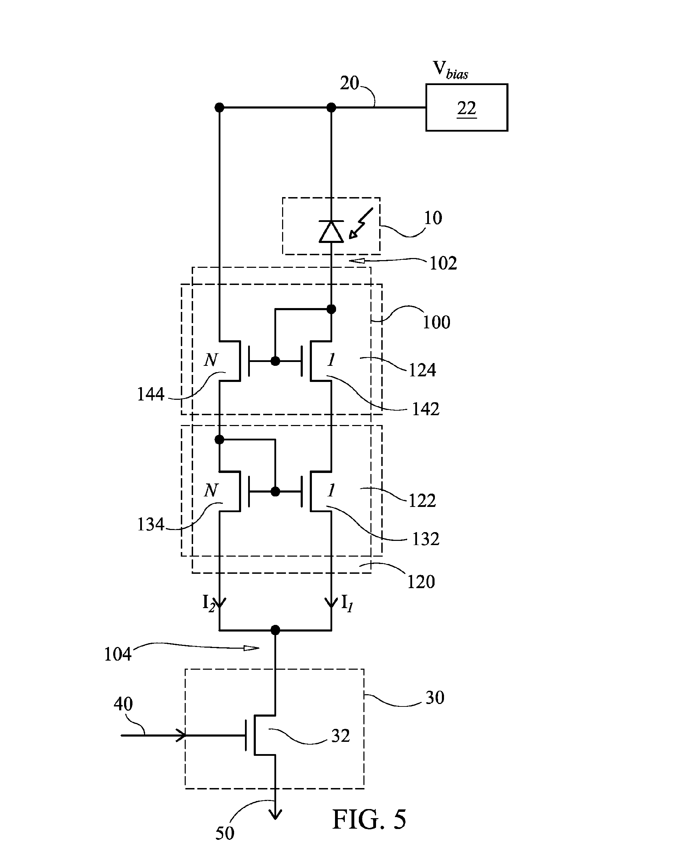

An advantageous, alternative embodiment of the pixel unit 1 of Figure 3 is shown in Figure 5. It differs from the embodiment shown in Figure 4 that the pixel unit 1 comprises an alternative embodiment for the current multiplier 100. The radiation detector 10 and the switch 3 operate identically as in the embodiment of Figure 4. The current multiplier 100 according to the embodiment of Figure 5 a dual stage single output current multiplier 120. Although viewed from the input side 102 and the output side 104, the operation of the current multiplier 100 is still largely the same as the current multiplier of the embodiment shown in Figure 4, the dual stage single output current multiplier 120 now comprises two current multiplier stages 122, 124. A main stage 122 is connected to the output side 104 of the current multiplier 100 and a buffer stage 124 is connected to the input side 102 of the current multiplier 100. The main stage 122 comprising a main input Thin Film Transistor 132 and a main output Thin Film Transistor 134. This main output Thin Film Transistor 134 comprising a width to length ratio W2/L2 equal to the width to length ratio of the main input Thin Film Transistor 132 W1/L1 multiplied by the predetermined factor N. The buffer stage 124 comprising a buffer input Thin Film Transistor 142 and a buffer output Thin Film Transistor 144. This buffer output Thin Film Transistor 134 comprising a width to length ratio W2/L2 equal to the width to length ratio W1/L1 of the buffer input Thin Film Transistor 132 multiplied by the predetermined factor N.

As shown in Figure 5 the buffer input Thin Film Transistor 142 is connected with:
- its drain to the input side 102 of the current multiplier 100;
- its gate to its drain;
- its gate to the gate of the buffer output Thin Film Transistor 144;
- its source to the drain of the main output Thin Film Transistor 134,
As further shown buffer input Thin Film Transistor 142 is paired with the buffer output Thin Film Transistor 144 that is connected with:
- its drain to the bias line 20;
- its gate to the gate of the buffer input Thin Film Transistor 142;
- its source to the drain of the main output Thin Film Transistor 134

As further shown in Figure 5 the main input Thin Film Transistor 132 is connected with:
- its drain to the source of the buffer input Thin Film transistor 142;
- its gate to the gate of the main output Thin Film Transistor 134; and
- its source to the source of the main output Thin Film Transistor 134.
As further shown the main input Thin Film Transistor 132 is paired with the main output Thin Film Transistor 134 that is connected with:
- its drain to the source of the buffer output Thin Film transistor 144;
- its gate to its drain;
- its source to the output side 104 of the current multiplier 100.

It is generally known that in the current multiplier 100 embodiment of Figure 4, because there is not an exact match in the drain to source Voltage level of both the input Thin Film Transistor 112 and the output Thin Film Transistor 114, this could result in a certain non-linearity in the operation of the current multiplier 100 often referred to as the "Early Effect", which could lead to a certain level of distortion of the signal generated by the current multiplier. In general the buffer stage 124 of the embodiment of Figure 5, eliminates this "Early Effect" as it ensures that the drian to source voltage of both the main input Thin Film Transistor 132 and the main output Thin Film transistor 134 are the same. It is further clear that the Thin Film Transistor pair 132, 134, functions similarly as the current multiplier 100 described for the embodiment of Figure 4 and therefor, during the readout time period Tr the mirror current I2 will be equal to the input current I1 multiplied by the predetermined factor N. It is clear that this ratio of I2 / I1 and the corresponding ratio of (W3/L3) / (W4/L4) will cause the gate to source Voltage of the Thin Film Transistor pair 142, 144 of the buffer stage 124 to be equal and thus as a consequence will equalise the source to drain Voltage of the Thin Film Transistor pair 132, 134 of the main stage 122, thus eliminating the "Early effect" mentioned above.

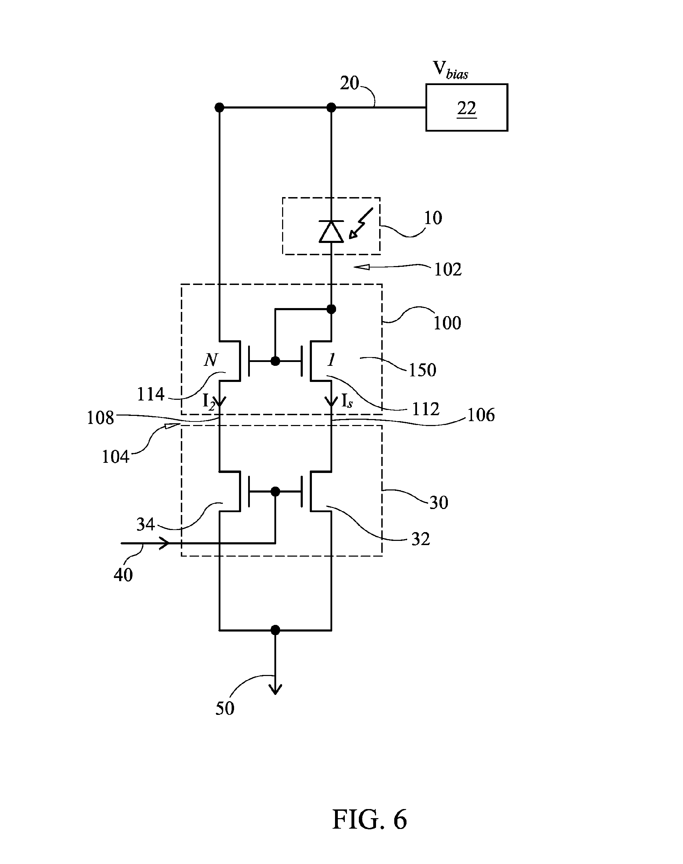

An advantageous, alternative embodiment of the pixel unit 1 of Figure 3 is shown in Figure 6. It differs from the embodiment shown in Figure 4 that the pixel unit 1 comprises an alternative embodiment for the current multiplier 100 and the switch 30. The radiation detector 10 operates identically as in the embodiment of Figure 4. The current multiplier 100 according to the embodiment of Figure 6 is a dual output current multiplier 150. Although viewed from the input side 102, the operation of the current multiplier 100 is still largely the same as the current multiplier of the embodiment shown in Figure 4, it now comprises at its output side 104 a first output 106 and a second output 108. It is clear that as in the embodiment of Figure 4, the dual output current multiplier 150 comprises an input Thin Film Transistor 112 and an output Thin Film Transistor 114. This output Thin Film Transistor 114 equally comprising a width to length ratio W2/L2 equal to the width to length ratio W1/L1 of the input Thin Film Transistor 112 multiplied by the predetermined factor N. As shown in detail in Figure 6 the input Thin Film Transistor 112 is connected with:
- its drain to the input side 102 of the current multiplier 100;
- its gate to the gate of the output Thin Film Transistor 114; and
- its source to a first output 106 at the output side 104 of the current multiplier 100.
The output Thin Film Transistor 114 is connected with:
- its drain to the bias line 20;
- its gate to its drain;
- its source to a second output 108 at the output side 104 of the current multiplier 100.
It is thus clear that the input current I1 and the mirror current I2, will flow out of the dual output current multiplier 150 during the readout time period Tr at two distinct outputs 106, 108.

The switch 30 is adapted to this and comprises a Thin Film Transistor pair 32, 34 that each receive one of the outputs 106, 108 of the dual output current multiplier 150. The drain of the first Thin Film Transistor 32 is connected with the first output 106 of the output side 104 of the current multiplier 100. The drain of the second Thin Film Transistor 34 is connected with the second output 108 of the output side 104 of the current multiplier 100. However the, as with the embodiments described above the gate of both these Thin Film Transistors 32, 34 is connected to the driving line 40 and their source is connected to the readout line 50. So as with the embodiments described above during the integration time period Ti both Thin Film Transistors 32, 34 are in the "OFF" state and disconnect both outputs 106, 108 of the output side 104 of the current multiplier 100 from the readout line 50. During the readout time period Tr both Thin Film Transistors are in the "ON" state and connect both outputs 106, 108 of the output side 104 of the current multiplier to the readout line 50. It is clear that both Thin Film Transistors 32, 34 in this way additionally connect the first output 106 and the second output 108 during the readout time period Tr, as they are both in the "ON" state and connect both outputs 106, 108 to the same readout line 50. Further it is also clear that both Thin Film Transistors 32, 34, during the integration time period Ti in which they are both in their "OFF" state, disconnect the first output 106 and the second output 108. This is advantageous as this breaks the closed loop of the current multiplier circuit 100 and in this way further decreases current leakage from the PIN photodiode during the integration time period Ti.

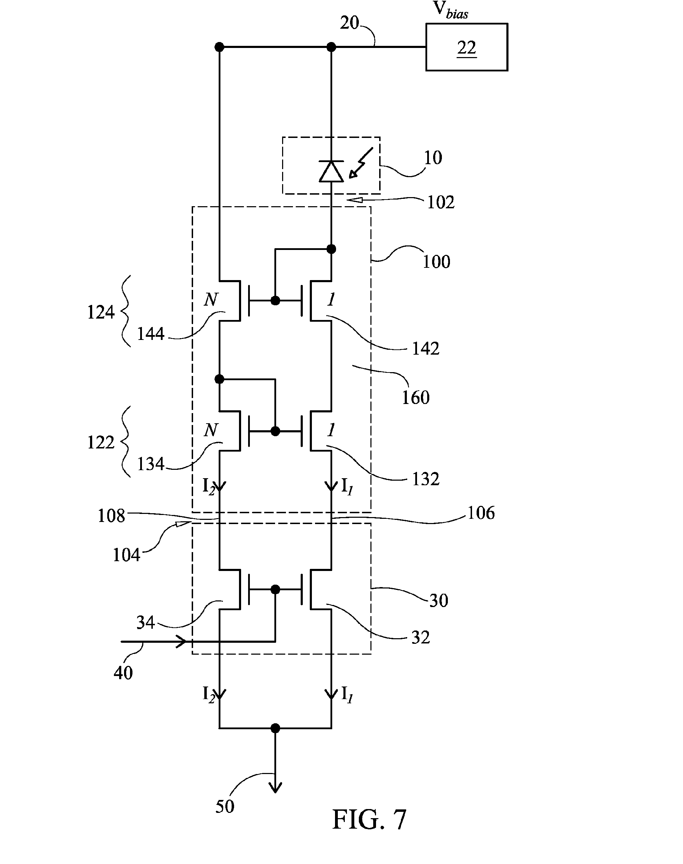

Figure 7 illustrates still a further advantageous alternative embodiment of the pixel unit 1 of Figure 3. It differs from the embodiment shown in Figure 6 that the pixel unit 1 comprises an alternative embodiment for the current multiplier 100. The radiation detector 10 and the switch 30 operate identically as in the embodiment of Figure 6. The current multiplier 100 of the embodiment of Figure 7 comprises a dual stage dual output current multiplier 160. The operation of the dual stage dual output current multiplier 160 similarly as the dual stage single output current multiplier 120 of Figure 5 comprises a main stage 122 connected to the output side 104 of the current multiplier 100 and a buffer stage 124 connected to the input side 102 of the current multiplier 100. Also here both stages 122, 124 use a pair of Thin Film Transistors 132, 134; 142, 144 with ratios for their respective width to length ratio as described for the embodiments above. This means that the main stage 122 comprises a main input Thin Film Transistor 132 with a width to length ratio W1/L1 and a main output Thin Film Transistor 134 with a width to length ratio W2/L2 equal to the width to length ratio W1/L1 of the main input Thin Film Transistor 132 multiplied by the predetermined factor N. This also means that the buffer stage 124 comprises a buffer input Thin Film Transistor 142 with a width to length ratio W1/L1 and a buffer output Thin Film Transistor 144 with a width to length ratio W2/L2 equal to the width to length ratio W1/L1 of the buffer input Thin Film Transistor 132 multiplied by the predetermined factor N.

As further shown in Figure 7 the Thin Film Transistor pair 142, 144 of the buffer stage 124 are provided such that the buffer input Thin Film Transistor 142 is connected with:
- its drain to the input side 102 of the current multiplier 100;
- its gate to its drain;
- its gate to the gate of the buffer output Thin Film Transistor 144;
- its source to the drain of the main output Thin Film Transistor 134.
The buffer output Thin Film Transistor 144 is connected with:
- its drain to the bias line 20;
- its gate to the gate of the buffer input Thin Film Transistor 142;
- its source to the drain of the main output Thin Film Transistor 134.
It is thus clear that this buffer stage 124 will function similarly as the buffer stage 124 of the embodiment of Figure 5 and will equalise the drain to source voltage of the Thin Film Transistor pair 132, 134 of the main stage122.

This main stage 122 as shown in Figure 7 comprises a main input Thin Film Transistor 132 that is connected with:
- its drain to the source of the buffer input Thin Film transistor 142;
- its gate to the gate of the main output Thin Film Transistor 134; and
- its source to a first output 106 at the output side 104 of the current multiplier 100. The main output Thin Film Transistor 134 is connected with:
- its drain to the source of the buffer output Thin Film transistor 144;
- its gate to its drain;
- its source to a second output 108 the output side 104 of the current multiplier 100.
It is clear that this main stage 122 differs from that of the embodiment of Figure 5 in that it comprises two distinct outputs 106, 108 for the input current I1 and I2.

Similarly as in the embodiment of Figure 6 the switch 30 has been adapted to this and comprises a Thin Film Transistor pair 32, 34 that each receive one of the outputs 106, 108 of the dual output current multiplier 150. The drain of the first Thin Film Transistor 32 is connected with the first output 106 of the output side 104 of the current multiplier 100. The drain of the second Thin Film Transistor 34 is connected with the second output 108 of the output side 104 of the current multiplier 100. The operation of this switch 30 is identical to that of the embodiment of Figure 6 and thus also ensures that during the integration time period Tr the leakage current of the PIN photodiode 10 is further reduced by breaking the circuit of the current multiplier 100.

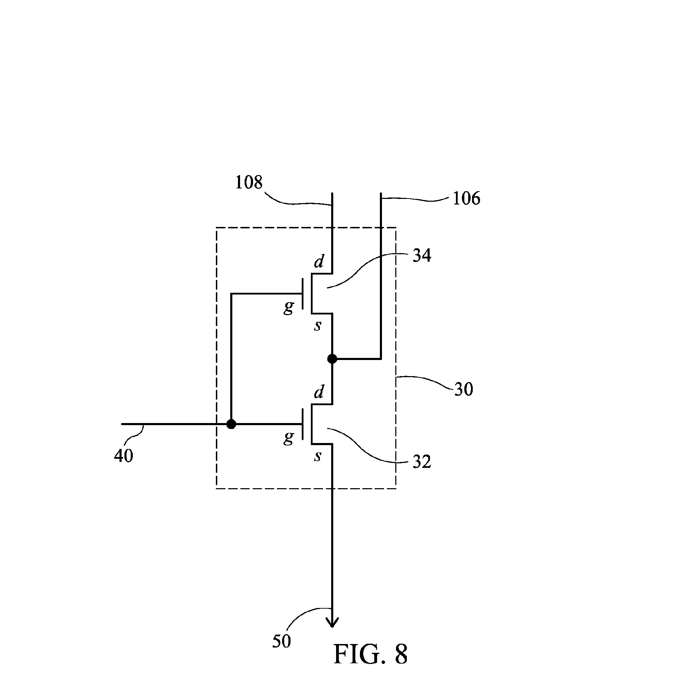

In general for the embodiments of Figures 6 and 7, comprising a current multiplier 100 with two distinct outputs 106, 108 at the output side 104 any other suitable embodiment of the switch 30 could be used. As long as the switch 30 is able to, next to connecting the outputs 106, 108 to the readout line 50, it also connects the first output 106 and the second output 108 during the readout time period Tr. And additionally, as long as, next to disconnecting both outputs 106, 108 from the readout line 50, it also disconnects the first output 106 and the second output 108, during the integration time period Ti. One possibility for an alternative embodiment of such a switch 30 is shown in Figure 8. Here a first Thin Film Transistor 32 is connected with:
- its gate to the driving line 40;
- its source to the readout line 50;
- its drain to the second output 106.
The second Thin Film Transistor 34 is connected with:
- its gate to the driving line 40;
- its source to the drain of the first Thin Film Transistor and the second output 106;
- its drain to the second output 108.
It is clear that during operation the first Thin Film Transistor 32 will take care of the connection and disconnection to the readout line 50, while the second Thin Film Transistor 34 will enable the connection and disconnection of both outputs 106, 108 of the current multiplier 100.

As shown in Figure 9, the pixel unit 1 according to the embodiments described above can be implemented as microelectronic components arranged on a substrate 200. This substrate 200 could be any suitable substrate such as glass, however any other suitable substrate 200 for example synthetic resins which for example allow for a more flexible substrate 200 could be used. On top of this substrate there is applied transistor layer 202, for example an amorphous Silicon (a-Si) layer in which the TFT transistors can be formed for implementing the switch 30 and the current multiplier 100. On top of this transistor layer 202, there is provided an insulation layer 204. On top of this insulation layer 204 the P, I and N layers of the PIN photodiode 10 are provided with the N layer, forming the cathode 14 facing away from the substrate 200 and thus facing the radiation 4. The P layer of the PIN photodiode 10, forming the anode 12 thus faces away from the radiation and faces the substrate 200. On top of the layers of the PIN photodiode 10 there is provided the scintillator 206, which can be made mainly of fluorescent material that converts the radiation 4 into radiation in a spectrum more suited for the PIN photodiode 10. The scintillator in this way could for example convert X-ray radiation to electromagnetic radiation with a wavelength of 300nm to 800nm which corresponds to the spectrum of visible light. Such an arrangement of the PIN photodiode 10 allows an implementation which simplifies manufacturing and allows the radiation 4 converted by the scintillator 206 to reach the PIN photodiode 10 with minimal degradation. Also image lag is reduced as most of the photo electron hole pairs are generated high up in the N-layer and just above in the I-layer. In an exemplary embodiment with a P⁻ casual doping in the PIN photodiode I-layer then the metallurgical PN - junction will be high up in the N-layer at the upper side of the PIN photodiode 10. This will result in a very short and fast path to travel through the silicon roster from electron hole pair generation by the visible spectrum photon to the capture of the photo charge on the PN-junction. Furthermore the photo charge will not get a lot in contact with the slow traps deeper in the I-layer of the PIN photodiode.

It is further clear that numerous alternative embodiments comprising a pixel unit 1 according to the invention can be provided. Specifically alternative combinations of a specific radiation detector 10, a specific switch 30 and a specific current multiplier 100. It is further also clear that the implementation of the switch 30 and/or the current mirror 100 although in some of the specific embodiments illustrated as Thin Film Transistors 32 can be replaced by other suitable alternatives such as for example other suitable semiconductor technologies, such as other field effect transistor technologies for example organic field effect transistors, or other technologies such as bipolar junction transistors. Specifically for the switch 30 other alternative semiconductor elements than transistors could be used to perform its function such as for example diodes or thyristors.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A pixel unit (1) for a radiographic image detecting apparatus (2) comprising:
- a radiation detector (10) configured to generate electric charge (3) upon reception of radiation (4) emitted by a radiographic image radiation source (5);
- a bias line (20) configured to provide a bias voltage (22), the bias line (20) being connected to the radiation detector (10); and
- a switch (30) connected to the radiation detector (10), a driving line (40) and a readout line (50), the switch (30) being configured to be operated in function of a driving signal (42) received from the driving line (40) such that the switch (30):
- during an integration time period (Ti), disconnects the radiation detector (10) from the readout line (50), such that the electric charges (3) generated by the radiation detector (10) are accumulated;
- during a readout time period (Tr), connects the radiation detector (10) to the readout line (50) such that the accumulated electric charges (3) generated by the radiation detector (10) produce a readout signal (52),
**CHARACTERIZED IN THAT**
the pixel unit (1) further comprises a current multiplier (100) connecting the radiation detector (10) and the switch (30),
- the current multiplier (100) configured to provide at an output side (104) an output current equal to a current received at an input side (102) multiplied with a predetermined factor,
- the input side (102) of the current multiplier (100) being connected to the radiation detector (10), and
- the output side (104) of the current multiplier (100) being connected to the switch (30).

2. A pixel unit (1) according to claim 1, **characterized in that** the radiation detector (10) comprises a photo-electric detector (10).

3. A pixel unit (1) according to claim 1 or 2, **characterized in that** the photo-electric detector (10) comprises a PIN photodiode (10) configured to detect X ray photons.

4. A pixel unit (1) according to claim 3, **characterized in that** the PIN photodiode (10), the switch (30) and the current multiplier (100) are arranged on a substrate (200) as microelectronic components; and **in that** the cathode (14) of the PIN diode faces away from the substrate (200).

5. A pixel unit (1) according to claim 3 or 4, **characterized in that** the PIN photo diode (10) is connected with its cathode (12) to the bias line (20) and with its anode (14) to the input side (102) of the current multiplier (100), and **in that** the bias voltage (22) is a predetermined positive voltage.

6. A pixel unit (1) according to any of the preceding claims, **characterized in that** the current multiplier (100) comprises a single output current multiplier (110) comprising an input Thin Film Transistor (112) and an output Thin Film Transistor (114) comprising a width to length ratio equal to the width to length ratio of the input Thin Film Transistor multiplied by the predetermined factor,
- the input Thin Film Transistor (112) being connected with:
- its drain to the input side (102) of the current multiplier (100);
- its gate to its drain;
- its gate to the gate of the output Thin Film Transistor (114); and
- its source to the source of the first output Thin Film Transistor (114),
- the output Thin Film Transistor (114) being connected with:
- its drain to the bias line (20);
- its gate to the gate of the input Thin Film Transistor (112);
- its source to the output side (104) of the current multiplier (100).

7. A pixel unit (1) according to any of the preceding claims, **characterized in that** the current multiplier (100) comprises a dual stage single output current multiplier (120) comprising an main stage (122) connected to the output side (104) of the current multiplier (100) and a buffer stage (124) connected to the input side (102) of the current multiplier (100),
- the main stage (122) comprising a main input Thin Film Transistor (132) and a main output Thin Film Transistor (134), the main output Thin Film Transistor (134) comprising a width to length ratio equal to the width to length ratio of the main input Thin Film Transistor (132) multiplied by the predetermined factor,
- the buffer stage (124) comprising a buffer input Thin Film Transistor (142) and a buffer output Thin Film Transistor (144), the buffer output Thin Film Transistor (134) comprising a width to length ratio equal to the width to length ratio of the buffer input Thin Film Transistor (132) multiplied by the predetermined factor,
- the buffer input Thin Film Transistor (142) being connected with:
- its drain to the input side (102) of the current multiplier (100);
- its gate to its drain;
- its gate to the gate of the buffer output Thin Film Transistor (144);
- its source to the drain of the main output Thin Film Transistor (134),
- the buffer output Thin Film Transistor (144) being connected with:
- its drain to the bias line (20);
- its gate to the gate of the buffer input Thin Film Transistor (142);
- its source to the drain of the main output Thin Film Transistor (134),
- the main input Thin Film Transistor (132) being connected with:
- its drain to the source of the buffer input Thin Film transistor (142);
- its gate to the gate of the main output Thin Film Transistor (134); and
- its source to the source of the main output Thin Film Transistor (134),
- the main output Thin Film Transistor (134) being connected with:
- its drain to the source of the buffer output Thin Film transistor (144);
- its gate to its drain;
- its source to the output side (104) of the current multiplier (100).

8. A pixel unit (1) according to any of the 1 to 4, **characterized in that** the current multiplier (100) comprises a dual output current multiplier (150) comprising an input Thin Film Transistor (112) and an output Thin Film Transistor (114) comprising a width to length ratio equal to the width to length ratio of the input Thin Film Transistor multiplied by the predetermined factor,
- the input Thin Film Transistor (112) being connected with:
- its drain to the input side (102) of the current multiplier (100);
- its gate to the gate of the output Thin Film Transistor (114); and
- its source to a first output (106) at the output side (104) of the current multiplier (100),
- the output Thin Film Transistor (114) being connected with:
- its drain to the bias line (20);
- its gate to its drain;
- its source to a second output (108) at the output side (104) of the current multiplier (100),
- the switch (30) being further configured to:
- during the readout time period (Tr), connect the first output (106) and the second output (108); and
- during the integration time period (Tr), disconnect the first output (106) and the second output (108).

9. A pixel unit (1) according to any of the claims 1 to 4, **characterized in that** the current multiplier (100) comprises a dual stage dual output current multiplier (160) comprising an main stage (122) connected to the output side (104) of the current multiplier (100) and a buffer stage (124) connected to the input side (102) of the current multiplier (100),
- the main stage (122) comprising a main input Thin Film Transistor (132) and a main output Thin Film Transistor (134), the main output Thin Film Transistor (134) comprising a width to length ratio equal to the width to length ratio of the main input Thin Film Transistor (132) multiplied by the predetermined factor,
- the buffer stage (124) comprising a buffer input Thin Film Transistor (142) and a buffer output Thin Film Transistor (144), the buffer output Thin Film Transistor (134) comprising a width to length ratio equal to the width to length ratio of the buffer input Thin Film Transistor (132) multiplied by the predetermined factor,
- the buffer input Thin Film Transistor (142) being connected with:
- its drain to the input side (102) of the current multiplier (100);
- its gate to its drain;
- its gate to the gate of the buffer output Thin Film Transistor (144);
- its source to the drain of the main output Thin Film Transistor (134),
- the buffer output Thin Film Transistor (144) being connected with:
- its drain to the bias line (20);
- its gate to the gate of the buffer input Thin Film Transistor (142);
- its source to the drain of the main output Thin Film Transistor (134),
- the main input Thin Film Transistor (132) being connected with:
- its drain to the source of the buffer input Thin Film transistor (142);
- its gate to the gate of the main output Thin Film Transistor (134); and
- its source to a first output (106) at the output side (104) of the current multiplier (100);
- the main output Thin Film Transistor (134) being connected with:
- its drain to the source of the buffer output Thin Film transistor (144);
- its gate to its drain;
- its source to a second output (108) the output side (104) of the current multiplier (100),
- the switch (30) being further configured to:
- during the readout time period (Tr), connect the first output (106) and the second output (108); and
- during the integration time period (Ti), disconnect the first output (106) and the second output (108).

10. A pixel unit (1) according to any of the preceding claims, **characterized in that** said switch (30) comprises at least one Thin Film Transistor (32, 34).

11. A pixel unit (1) according to 10, **characterized in that** the switch (30) comprises at least one Thin Film Transistor (32, 34) that is connected with:
- its gate to the driving line (40);
- its source to the readout line (50);
- its drain to the output side (104) of the current multiplier (100).

12. A pixel unit (1) according to claim 11 when dependent on claim 8 or 9, **characterized in that** the switch (30) comprises a first Thin Film Transistor (32) and a second Thin Film Transistor (34),
- the drain of the first Thin Film Transistor (32) being connected with the first output (106) of the output side (104) of the current multiplier (100),
- the drain of the second Thin Film Transistor (34) being connected with the second output (106) of the output side (104) of the current multiplier (100).

13. A radiographic image detecting apparatus (2) comprising a plurality of pixel units (1) according to any of the preceding claims.

14. A radiographic image detecting apparatus (2) according to claim 13, **characterized in that** the plurality of pixel units (1) are arranged in a plurality of rows and columns.

15. A radiographic image detecting apparatus (2) according to claim 14, **characterized in that** the image detecting apparatus comprises a plurality of the driving lines (40) and a plurality of the readout lines (50), the driving lines (40) each being connected to a plurality of pixel units (1) of a single row and each of the readout lines (50) each being connected to a plurality of pixel units (1) of a single column.
